# EUROPEAN PATENT SPECIFICATION

(11) **EP 1 569 363 B1**
(45) Date of publication and mention of the grant of the patent: **19.11.2008**
(21) Application number: 05012266.2
(22) Date of filing: 12.02.2001
(51) Int. Cl.: H04B 7/185

(54) **Mobile communications apparatus and method in a dual terrestrial satellite mode.**
Gerät und Verfahren für mobile Kommunikation in dualem erdlich satellitären Modus
Appareil et méthode de communications mobiles en mode dual terrestriel et satellitaire

(43) Date of publication of application: 31.08.2005
(62) Divisional of application: 01301226.5
(73) Proprietor: ICO Services Ltd., Uxbridge, Middlesex UB8 2AD (GB)
(72) Inventor: Regulinski, Paul Lucian, London, SW7 4AW (GB); Nampoothiri, Govindan Vishnu, Isleworth, Middlesex, TW7 5JR (GB); Chomet, Park, London, N6 6QL (GB)
(74) Representative: Grünecker, Kinkeldey, Stockmair & Schwanhäusser Anwaltssozietät

(56) References cited:
- EP-A- 0 597 225
- EP-A- 0 858 177
- WO-A-95/27381
- WO-A-97/26717
- US-A- 5 584 046
- US-A- 5 949 766

## Description

This invention relates to communications with a mobile user, and particularly to such communications in which the link to the mobile user is via a satellite or satellites.

Mobile satellite communication systems providing global coverage are know. One such is the Iridium™ system, others are the ICO™ system the Globalstar System™, and the Teledesic™ system.

Since such systems operate globally (or at least, over a large part of the Earth's surface) they need to use a band of frequencies which are available all round the Earth, and because allocation of radio frequencies is partly a matter for national Governments this has proved difficult.

One of the constraints on the amount of RF spectrum available for satellite systems is the use of radio frequencies by terrestrial mobile networks (sometimes referred to as public land mobile networks or PLMNs). In recent years, plans have been drawn up for the next generation of mobile networks (the so-called "third generation" or 3G mobile networks). These will utilise code division multiple access (CDMA). Code division multiple access is a so-called "spread spectrum" system, in which a given mobile device communicates using a relatively wide band, produced by multiplying the digital signal with a high bit rale ("chip rate") code sequence. Each code sequence defines a separate code channel.

Ideally, the satellite and terrestrial communications systems could be allocated completely separately frequency ranges, and they would then not interfere. However, known systems require ever more bandwidth.

Accordingly, the present invention is designed to increase the possibilities for reusing the same channels (for example frequency channels) between terrestrial and satellite mobile communication systems.

US 5,394,561 discloses a mechanism for networking satellite and terrestrial networks in which the power levels of the satellite and terrestrial communications are controlled so as to minimise co-channel interference.

EP-A-0597225 discloses a satellite hierarchical communication network in which all three levels (satellite, terrestrial and in-building) use common FDM channels, and satellite channels are reused by in-building cells where they cannot interfere.

It is the object of the present invention to provide improved possibilities for reusing a frequency spectrum between terrestrial and satellite mobile communication systems.

The object is solved by the subject matter of the independent claims.

Preferred embodiments of the present invention are defined by the dependent claims.

In one aspect, the invention provides a communications system comprising a satellite mobile communications network which comprises a plurality of satellites and a plurality of user terminals communicating on satellite uplink and downlink bands; and a terrestrial mobile communications network which comprises a plurality of base stations and a plurality of user terminal communicating on terrestrial uplink and downlink bands; **characterised in that** at least one of the terrestrial bands at least partly reuses at least one of the satellite bands.

In another aspect, the present invention provides a frequency reuse system comprising means for reducing use of said satellite downlink in regions around one of said base stations.

Where the satellite downlink (typically the mobile link) shares the same frequencies as the land network, dual mode terminals will be able to use the terrestrial network instead of the satellite network, and interference from the satellite downlink into the land network is reduced.

In another aspect, the present invention provides provides a frequency reuse system, comprising means for transmitting a control signal to satellite user terminals in regions around one of said base stations to cause said user terminals to reduce use of said satellite uplink.

Thus, in cases where the satellite uplink shares the spectrum with the terrestrial network, again, a dual mode handset is able to communicate using the terrestrial network, and interference from the satellite uplink into the land network is reduced. The handset can also continue to receive control signals from the satellite on the satellite downlink. Interference from the handset into the terrestrial network is thereby prevented.

The control signal may be transmitted by the satellite.

In another embodiment, the control signal may be transmitted by the land network. As in the preceding embodiment, where the satellite uplink shares channels with the terrestrial network, interference from the satellite uplink is mitigated. Additionally, in this case, since the user terminal responds to a signal transmitted by the terrestrial network itself, rather than by the satellite as in the previous aspect, use of the satellite uplink is only suppressed when the user terminal is actually within range of the terrestrial network.

In another aspect, the invention provides a dual mode user terminal in which the satellite system shares frequencies with the terrestrial system, and in which the user terminal is arranged to detect downlink or uplink transmission on the terrestrial network, and to cease use of the satellite uplink on detection thereof.

In one particular aspect, the uplink and downlink frequencies of a terrestrial network reuse the same frequencies as the satellite downlink but not the satellite uplink. This has the substantial advantage that no transmissions from the terrestrial network are received by the satellite; such transmissions would be more powerful than the weak signals transmitted by a satellite handset and hence would cause significant interference. In the reverse direction, the satellite downlink is low power because, firstly, the battery and solar cell power available on the satellite is limited and, secondly, the path length travelled is long. Thus, the total power in the satellite downlink is low and causes minimal interference.

In a particular preferred embodiment, this aspect of the invention is employed with a satellite using frequency, or frequency and time, division multiplexing and a terrestrial network employing CDMA. Where only a small number of satellite downlink transmissions are taking place, the effect of these on each CDMA signal is limited since they occupy only a small part of the CDMA spectrum. The interference from the satellite is thus even less intrusive in this embodiment.

This aspect is particularly preferably employed with the first aspect of the invention, in which case because the terrestrial network uses the satellite frequencies only in shadowed areas (such as urban areas), the satellite downlink affect is reduced still further since the satellite signal is usually shadowed.

In another aspect, the invention provides a satellite system which reuses radio spectrum with a terrestrial communications network, in which the satellite uplink shares spectrum with the terrestrial uplink and the satellite downlink shares spectrum with the terrestrial downlink. In this case, and particularly when this aspect is combined with the first, the satellite uplink causes relatively little interference at the handset (and particularly when the terrestrial network uses spread spectrum communication and the satellite uses frequency division or frequency and time division multiplexing).

Also, in this embodiment or others it is particularly convenient to provide a dual mode user terminal with a single radio frequency transmit and receive circuit, to which a separate terrestrial (for example CDMA) and satellite (for example FDMA/TDMA) decoder and demodulator are coupled.

Other aspects and preferred embodiments of the invention are as described or claimed hereafter, with advantages which will be apparent from the following.

### BRIEF DESCRIPTION OF THE DRAWINGS

Embodiments of the invention will now be described, by way of example only, with reference to the accompanying drawings, in which:
Figure 1 is a block diagram showing schematically the elements of a first communications system embodying the present invention;
Figure 2a is an illustrative diagram showing schematically the elements of mobile terminal equipment suitable for use with the present invention; and
Figure 2b is a corresponding block diagram;
Figure 3 is a block diagram showing schematically the elements of an Earth station node forming part of the embodiment of Figure 1;
Figure 4a illustrates schematically the beams produced by a satellite in the embodiment of Figure 1;
Figure 4b illustrates schematically the disposition of satellites forming part of Figure 1 in orbits around the earth;
Figure 5 shows the arrangement of terrestrial base stations in the first embodiment;
Figure 6 shows the frequency allocation in the first embodiment;
Figure 7 shows the frequency allocation in the second embodiment;
Figure 8 is a block diagram showing the user terminal of the second embodiment;
Figure 9 shows the frequency allocation in the third embodiment; and

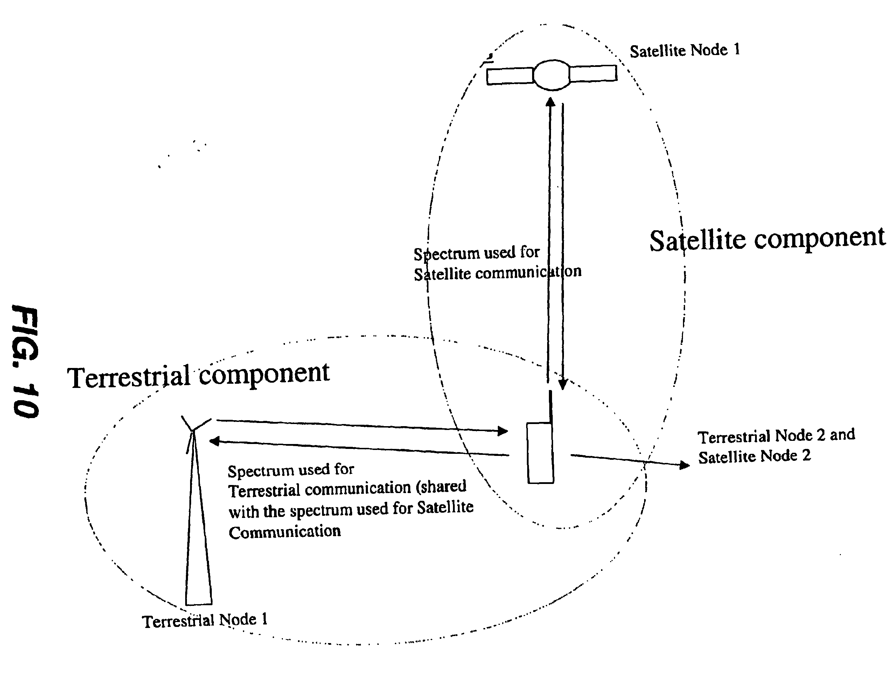

Figure 10 illustrates the uplinks and downlinks present in the invention.

### FIRST EMBODIMENT

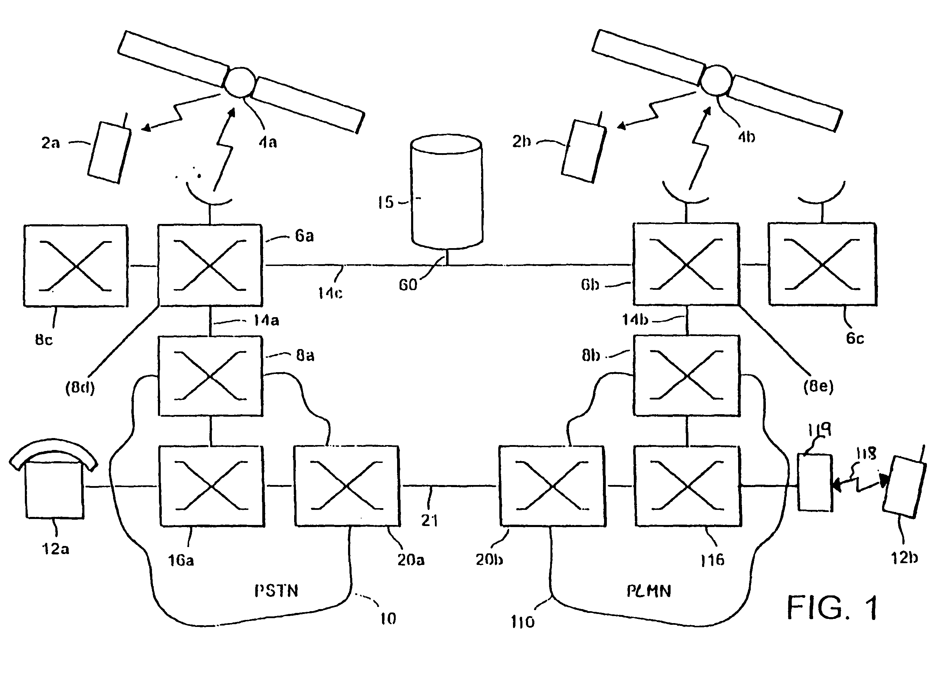

Referring to Figure 1, a satellite communications network according to this embodiment comprises mobile user terminal equipment 2a, 2b (*e.g.* handsets 2a and 2b); orbiting relay satellites 4a, 4b; satellite earth station nodes 6a, 6b; satellite system gateway stations 8a, 8b; terrestrial (*e.g.* public switched) telecommunications networks 10; and fixed telecommunications terminal equipment 12a; terrestrial (*e.g*. public land) mobile telecommunications networks (PLMNs) 110 and terrestrial mobile terminal equipment 12b.

Interconnecting the satellite system gateways 8a, 8b with the earth station nodes 6a, 6b, and interconnecting the nodes 6a, 6b with each other, is a dedicated ground-based network comprising channels 14a, 14b, 14c. The satellites 4, earth station nodes 6 and lines 14 make up the infrastructure of the satellite communications network, for communication with the mobile terminals 2, and accessible through the gateway stations 8.

A terminal location database station 15 (equivalent to a GSM HLR) is connected, via a signalling link 60 (e.g. within the channels 14 of the dedicated network) to the gateway station and earth stations 6.

The PSTNs 10 comprise, typically, local exchanges 16a, 16b to which the fixed terminal equipment 12a, 12b is connected via local loops 18a, 18b; and intemational switching centres 20a, 20b connectable one to another via transnational links 21 (for example, satellite links or subsea optical fibre cable links). The PSTNs 10a, 10b and fixed terminal equipment 12a, 12b (*e.g*. telephone instruments) are well known and almost universally available today.

The PLMNs 110 comprise, typically, mobile switching centres (MSCs) 116 to which the terrestrial mobile terminals 112 are connected via local radio paths 118 and base stations 119; and international gateways 20b.

For voice communications via the satellite network, each mobile terminal apparatus 2 is in communication with a satellite 4 via a full duplex channel (in this embodiment) comprising a downlink (to-mobile) channel and an uplink (from-mobile) channel, for example (in each case) a TDMA time slot on a particular frequency allocated on initiation of a call, as disclosed in UK patent applications GB 2288913 and GB 2293725. The satellites 4 in this embodiment are non geostationary, and thus, periodically, there is handover from one satellite 4 to another.

For voice communications via the PLMN, each mobile terminal apparatus 2 is in communication with a mobile switching centre 116 via a base station 119 using an uplink frequency band and a downlink frequency band.

### Mobile Terminal 2

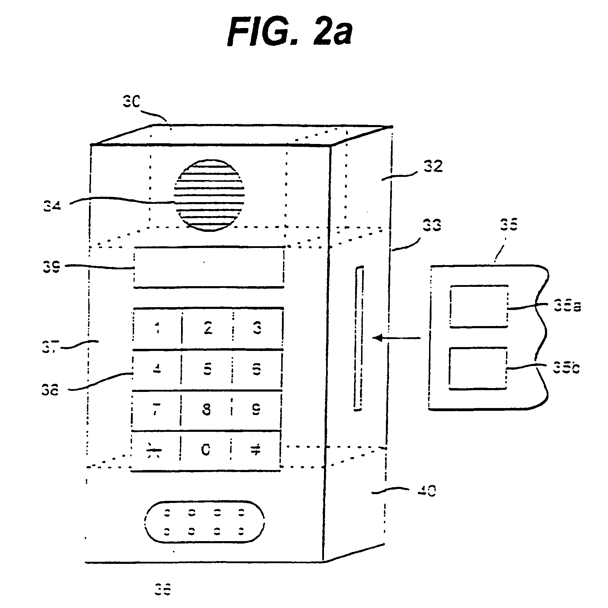

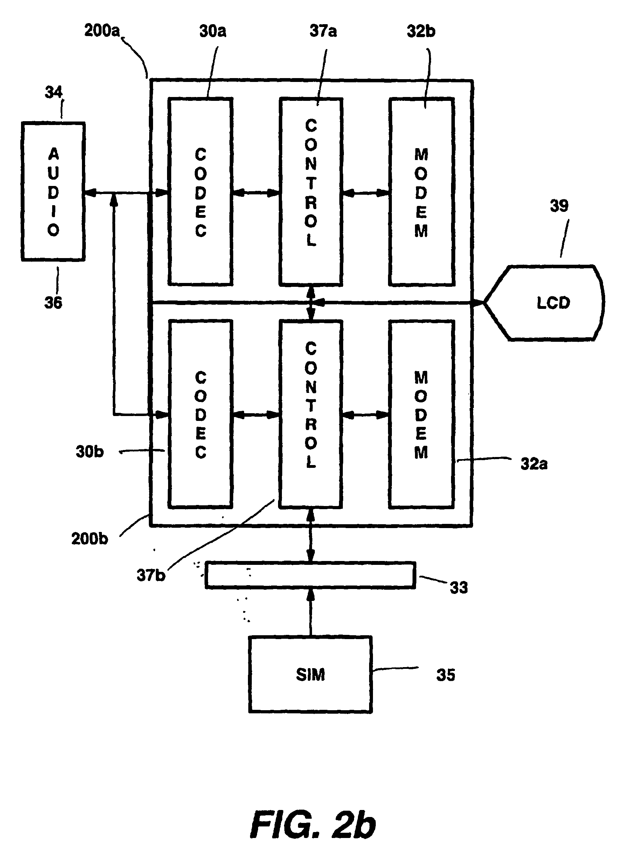

Referring to Figures 2a and 2b, a dual mode mobile terminal handset equipment 2a of Figure 1 is shown.

It comprises a combination of a satellite handset, similar to those presently available for use with the GSM system, and a terrestrial handset suitable for third generation (3G) CDMA communications.

The user interface components (microphone 36, loudspeaker 34, display 39 (for example a liquid crystal display) and keypad components 38) and power supply (battery 40) are shared, i.e. used in both modes.

Apart from such common components, the terminal comprises a CDMA functional unit 200a and a satellite functional unit 200b. Each comprises a digital low rate coder/decoder 30a, 30b; modem 32a, 32b; control circuit 37a, 37b; radio frequency (RF) interface 32a and 32b, and antennas 31a and 31b, suitable for satellite and terrestrial mobile communications respectively.

A 'smart card' reader 33 receiving a smart card (subscriber identity module or SIM) 35 storing user information are also provided, connected to communicate with the satellite control circuit 37b. Specifically, the SIM 35 includes a processor 35a and permanent memory 35b.

The control circuits 37a, 37b (in practice integrated with the respective coder 30) consist of a suitably programmed microprocessor, microcontroller or digital signal processor (DSP) chip. Each control circuit 37 performs various functions including framing speech and data into TDMA time frames for transmission (and likewise demultiplexing received TDMA frames) or CDMA sequences respectively; and performing encryption or enciphering.

Separate chipsets may be provided, each for implementing one of the terrestrial and satellite system functionalities 200a 200b. Alternatively, a single processor may be programmed to perform the coding and control for both functionalities. In each case, in this embodiment separate RF components are provided, but user interface components are shared.

The coder/decoder (codec) 30, 30b in this embodiment comprise a low bit rate coder, generating a speech bit stream at around 3.6 kilobits per second, together with a channel coder 30b applying error correcting encoding, to generate an encoded bit stream.

A single mode satellite handset is as shown, but lacking the section 200b and a single mode terrestrial handset is as shown but lacking section 200a. In this embodiment, there are more dual mode terminals than single mode satellite terminals.

### Earth Station Node 6

The earth station nodes 6 are arranged for communication with the satellites.

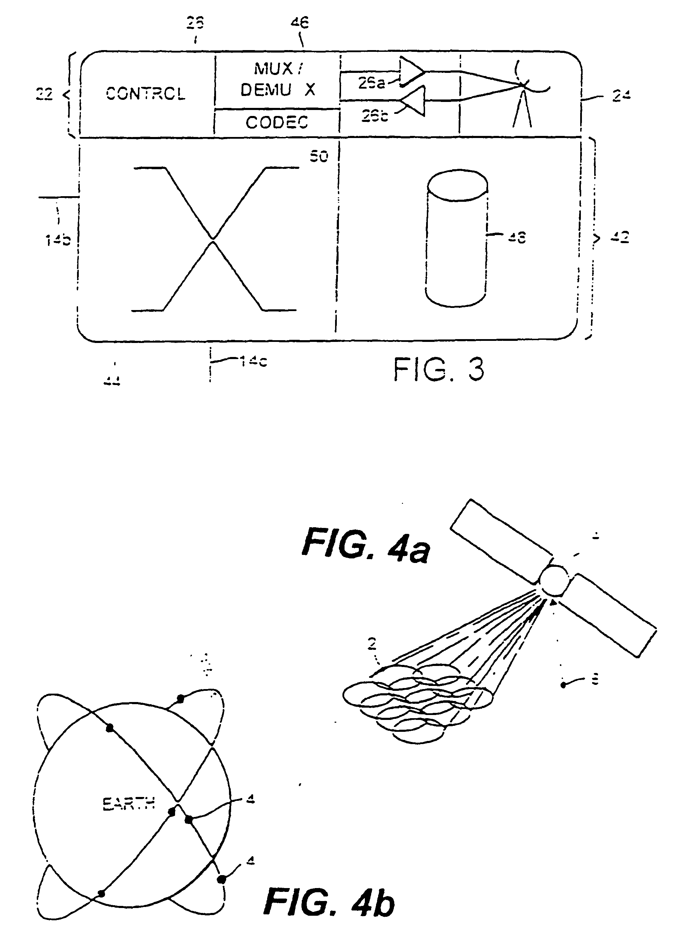

Each earth station node 6 comprises, as shown in Figure 3, a conventional satellite earth station 22 consisting of at least one satellite tracking antenna 24 arranged to track at least one moving satellite 4, RF power amplifiers 26a for supplying a signal to the antenna 24, and 26b for receiving a signal from the antenna 24; and a control unit 28 for storing the satellite ephemera data, controlling the steering of the antenna 24, and effecting any control of the satellite 4 that may be required (by signalling via the antenna 24 to the satellite 4).

The earth station node 6 further comprises a mobile satellite switching centre 42 comprising a network switch 44 connected to the trunk links 14 forming part of the dedicated network. A multiplexer 46 is arranged to receive switched calls from the switch 44 and multiplex them into a composite signal for supply to the amplifier 26 via a low bit-rate voice codec 50. Finally, the earth station node 6 comprises a local store 48 storing details of each mobile terminal equipment 2a within the area served by the satellite 4 with which the node 6 is in communication.

### Gateway 8

The gateway stations 8a, 8b comprise, in this embodiment, commercially available mobile switch centres (MSCs) of the type used in digital mobile cellular radio systems such as GSM systems.

The gateway stations 8 comprise a switch arranged to interconnect incoming PSTN lines from the PSTN 10 with dedicated service lines 14 connected to one or more Earth station nodes 6.

### Database Station 15

The database station 15 comprises a digital data store, a signalling circuit, a processor interconnected with the signalling circuit and the store, and a signalling link interconnecting the database station 15 with the gateway stations 8 and Earth stations 6 making up satellite system network, for signalling or data message communications.

It stores data for terminal apparatus 2, for example position data, billing data, authentication data and so on, like the Home Location Register (HLR) of a GSM system.

Thus, in this embodiment the database station 15 acts to fulfil the functions of a home location register (HLR) of a GSM system, and may be based on commercially available GSM products.

Periodically, the Earth station nodes measure the delay and Doppler shift of communications from the terminals 2 and calculate the rough terrestrial position of the mobile terminal apparatus 2 using the differential arrival times and/or Doppler shifts in the received signal. The position is then stored in the database 48.

The Earth stations 6 are positioned dispersed about the Earth such that for any orbital position, at least one Earth station 6 is in view of a satellite 4.

### Satellites 4

The satellites 4a, 4b comprise generally conventional communications satellite buses such as the HS601 available from Hughes Aerospace Corp, California, US, and the payload may be as disclosed in GB 2288913. Each satellite 4 is arranged to generate an array of beams covering a footprint beneath the satellite, each beam including a number of different frequency channels and time slots, as described in GB 2293725 and illustrated in Figure 4a.

On each beam, the satellite therefore transmits a set of downlink frequencies. The downlink frequencies on adjacent beams are different, so as to permit frequency re-use between beams. Each beam therefore acts somewhat in the manner of a cell of a conventional terrestrial cellular system. For example, there may be 61, 121 or 163 beams.

In this embodiment each downlink frequency carries a plurality of time division channels, so that each mobile terminal 2 communicates on a channel comprising a given time slot in a given frequency.

The satellites 4a are arranged in a constellation in sufficient numbers and suitable orbits to cover a substantial area of the globe (preferably to give global coverage).

For example 10 (or more) satellites may be provided in two mutually orthogonal intermediate circular orbits (or more) at an altitude of, for example, 10,500 kilometres (6 hour orbits) as shown in Figure 4b. Equally, however, larger numbers of lower satellites may be used, as disclosed in EP 0365885, or publications relating to the Iridium or Teledesic systems, for example.

The mobile phone will then operate either as a satellite telephone or as terrestrial phone, with the relevant functional unit 200a or 200b working substantially independently and as it would do in a single mode phone.

Referring to Figure 3, a global coverage constellation of satellites is provided, consisting of a pair of orbital planes each inclined at 45 degrees to the equatorial plane, spaced apart by 90 degrees around the equatorial plane, each comprising ten pairs of satellites 4a, 4b, (i.e. a total of 20 operational satellites) the pairs being evenly spaced in orbit, with a phase interval of zero degrees between the planes (i.e. a 10/2/0 constellation in Walker notation) at an altitude of about 10,000 km.

Thus, neglecting blockages, a UT at any position on Earth can always have a communications path to at least one satellite 4 in orbit ("global coverage").

### Base Station 119

The base station comprises a CDMA base station having transmit and receive antennas which are arranged to transmit signals on downlink code channels to mobile terminals, and to receive signals from mobile terminals on uplink CDMA channels. The downlink channels are provided, in this embodiment, in a downlink frequency band and the uplink signals in an uplink frequency band. At the base station 119, there is further provided a conventional demodulator for demodulating the uplink signals to provide digital data and for modulating digital data onto the downlink signals. Each code channel may spread across the entire uplink or downlink spectrum in known fashion.

The base stations 119 of this embodiment comprise first base stations 119a, each of which define a reception cell around it, which are deployed in suburban and rural areas as well as an in urban areas. In such cases, the effective sides of the cell will be of the order of several kilometres or even tens of kilometres, depending upon the line of sight visibility.

This embodiment also provides a second set of base stations 119b which are provided in urban or built up areas. Each defines a "microcell" or "picocell" around it, to provide coverage in heavily shadowed or built up urban areas. For example, within a building such as an airport or a train station, or along an underground railway, a number of such picocell base stations 119b are provided. Cover is therefore provided in areas where the base stations 119a usual cannot communicate and satellites 4 will almost never communicate.

The transmit and receive antennas at the base stations 119a are generally constrained to broadcast preferentially in the azimuthal plane; the transmit and receive antennas of terrestrial handsets are generally omnidirectional to permit the handset to be used in any orientation.

### Frequency Allocation

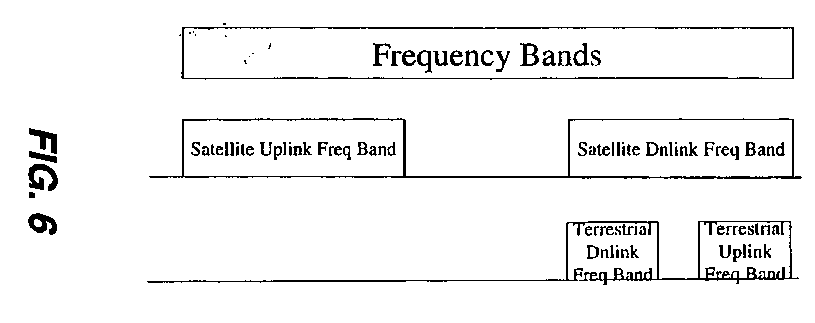

Figure 6 shows the frequency allocations in this embodiment. The feeder link frequencies will not be discussed further in the following embodiments, and the terms "satellite uplink" and "satellite downlink" hereafter will refer to the mobile links.

It will be seen that the satellite uplink frequency band occupies spectrum not shared by the terrestrial network. Thus, the (relatively powerful) transmission from the terrestrial base stations (and terminals) will not interfere with the (relatively weak) uplink signals received at the satellite from the satellite mobile terminals.

The base stations 119a have allocated uplink and downlink bands which do not interfere with the satellite uplink or downlink bands. As is conventional in cellular mobile systems, this spectrum is reused in geographically separate cells. In urban areas, there is a requirement for additional capacity since more users are present per square kilometre.

In this embodiment, the additional capacity is provided by reusing the satellite downlink, as shown in Figure 6, to provide additional terrestrial uplink and downlink bands. These are used by the base stations 119b in microcells and picocells; for the purpose of this embodiment, these are cells located inside or tunnels. (For reasons discussed further below, additional frequencies are present within the satellite downlink band which are not occupied by the additional terrestrial uplink and downlink frequencies.)

In such areas, the satellite downlink is usually blocked by ceilings or walls. Since the power radiated by the satellite is relatively low and the path length is relatively long, and the antenna used by a terrestrial user terminal has a relatively low gain (or G/T measure), the level of interference from the satellite is minimal.

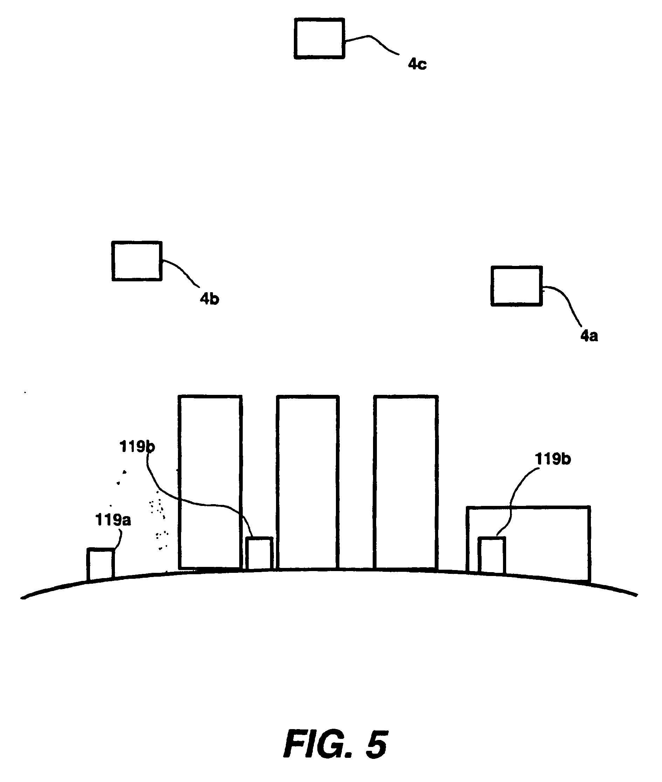

Referring to Figure 5, in this embodiment one or more of the base stations 119a which are located in urban areas may also make use of the additional frequency bands used by the pico base stations 119b. This is because, as shown in Figure 5, the level of shadowing by buildings makes communication with satellites 4a, 4b difficult; only on the rare occasions when a satellite 4c is in an unobstructed line of sight to a user terminal will the user terminal be affected by the satellite downlink, in urban areas.

Thus, to sum up, in this embodiment, the frequencies used by the terrestrial base stations 119 are allocated so that in urban or other shadowed areas, the additional terrestrial uplink and downlink bands lying within the satellite downlink band are utilised.

In this embodiment, as the satellite communicates with each user on a narrow frequency channel, even if communication with a relatively small number of satellite users continues in the urban area, the interference with the terrestrial uplink and downlink frequencies will be minor because, due to the spectrum spreading of CDMA, the interference on one particular frequency is (up to a certain level) absorbed in the CDMA error correction decoding. Thus, small numbers of (inherently low) satellite channels merely slightly raise the noise floor.

In this embodiment, however, the effects of such residual interference are reduced yet further by controlling the broadcast from the satellites 4. The orbits of each of the satellites 4 are characterised to a high degree of accuracy, and their inclinations are actively controlled to maintain their beam directions accurately pointing to Earth. Each of the satellite spot beams has a radius of the order of some tens or hundreds of kilometres. The spot beams of each satellite overlap, and those of one satellite overlap with those of another in the most regions of the Earth and at most times.

In this embodiment, the database station 15 maintains a database recording the positions of base stations 119b using the additional frequency bands which lie within the satellite downlink. The frequencies allocated to a given spot beam (which are dictated by a routing table held within each satellite and periodically reprogrammed within the data base station 15) are controlled so that the frequencies first allocated (i.e. preferentially allocated when available) are those from the region of the satellite downlink not occupied by terrestrial or downlink frequencies. Thus, a small number of satellite handsets may be operated without any possibility of interference with the terrestrial network.

Where such frequencies are exhausted, the next to be allocated to calls may be those which overlap with the terrestrial uplink band since each base station 119b can be provided with sophisticated interference reduction filters to reduce the effect of such interference.

The use of frequencies overlapping the terrestrial downlink frequency band is not permitted in any spot beam which covers the area overlying one of the base stations 119b.

Thus, in the preferred arrangement of this embodiment, the satellite downlink signals are selectively shut down to areas of coverage which include base stations 119b reusing the satellite downlink frequency, so as to mitigate the interference to the terrestrial stations.

It might be thought that the loss of satellite capacity would preclude economic operation of a satellite system in this embodiment. However, according to this embodiment it is envisaged that the vast majority of satellite user terminals will be dual mode terminals as illustrated in Figure 2. Accordingly, in areas where the satellite has shut down service, coverage through the terrestrial base stations 119 will be available. It is known only necessary for the satellite 4 to maintain a limited amount of coverage for those user terminals which are either satellite only mode, or which (for some reason) are blocked or shadowed from communicating with the terrestrial base stations 119 yet remain within communication with the satellites 4. By providing a small number of frequencies within the satellite downlink band which are not reused by the terrestrial uplink and downlink, contact with this small number of user terminals may be maintained.

### SECOND EMBODIMENT

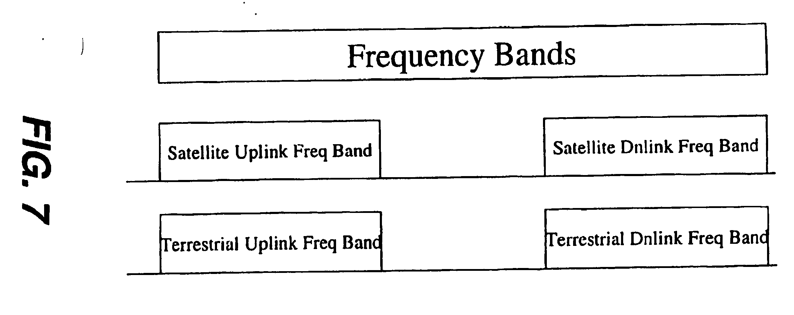

Referring to Figure 7, in this embodiment, the satellite uplink is reused by the second set of base stations 119b in urban areas as a terrestrial uplink, and the satellite downlink is reused by those base stations as a terrestrial downlink.

As in the preceding embodiment, the interference into the terrestrial downlink from the satellite downlink is minimal due to the blockage by buildings, and the use of the base stations 119b primarily within buildings. As in the preceding embodiment, the frequency channels used by each satellite are controlled so that overlapping frequencies are not used by the satellite downlink in beams which overlap the base stations 119b.

Interference from the terrestrial uplink into the satellite is similarly small because of the blocking and shadowing effects of buildings.

In this embodiment, additional measures are taken to limit the interference from the satellite user terminals into terrestrial base stations (satellite uplink into terrestrial uplinks) is minimised by additional measures in this embodiment, by providing that the satellite user terminals detect a signal indicating the possibility of interference, and in response cease to transmit satellite signals on the satellite uplink.

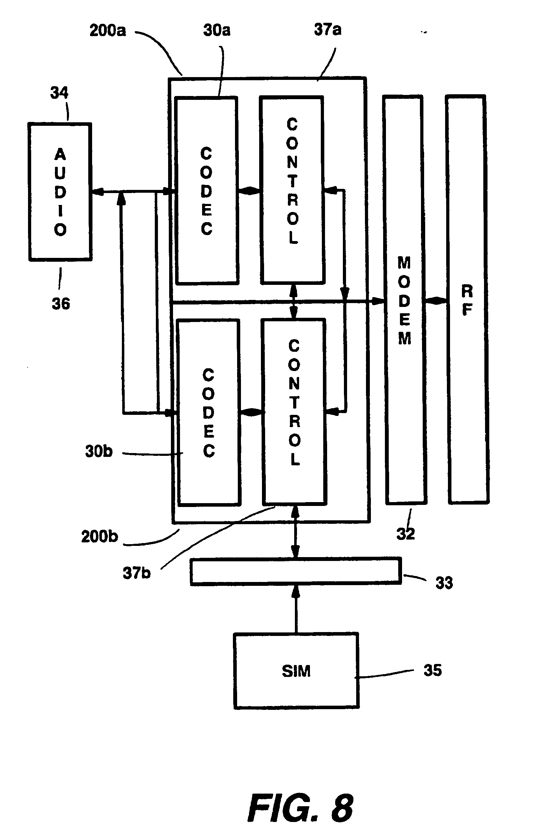

Again, in this embodiment, it is envisaged that most of the satellite user terminals are dual mode terminals. Referring to Figure 8, in this embodiment, as distinct from the preceding embodiment, since the satellite uplink and downlink spectra are the same as the additional terrestrial uplink and downlink spectra, a single RF receiver, modulator and demodulator, accepting digital signals at base band for modulation onto the uplink frequency and demodulating the downlink frequency to base band. Thus, the expensive RF components need not be duplicated, resulting in reduced cost, weight and power consumption. The single mode satellite handsets omit the CDMA codec portion shown in Figure 8.

In this embodiment, a special code is defined for transmission on the broadcast common control channel in each spot beam. When a spot beam overlies a base station 119b, which reuses the satellite frequencies, the code is broadcast. When it is received by any user terminal, the user terminal responds by ceasing all uplink transmissions by the satellite codec, until a control channel is detected a satellite downlink spot beam on which the control signal is not being broadcast (indicating that the user terminal is now within coverage of a spot beam that does not overlap the terrestrial base stations 119b).

The above described embodiment has the effect of causing all satellite user terminals which can receive the downlink on a beam which overlies one of the base stations 119b to cease to generate satellite signals on the satellite uplink. However, firstly, since the beam may cover a wider area than the cell surrounding the base station 119b, many user terminals which could otherwise communicate with the satellite without interfering with the terrestrial base station are adversely affected. Secondly, satellite user terminals which cannot receive the signal concerned (for example because of fading or blockage) may nonetheless broadcast on the satellite uplink channel and hence interfere with the terrestrial base station.

To resolve the first of these problems, rather than sending a broadcast mode control signal which is to be acted upon by all satellite user terminals within the beam, the position of each user terminal is registered with the data base station 15 (either by incorporating a GPS receiver within each user terminal which reports its data to the satellite periodically, or by using a range and Doppler position sensing technique as described above). The data base station 15 compares the position of each to data defining the coverage area of each of the base stations 119b, and when a satellite user terminal is detected to be within one of the coverage areas, a control signal of the type discussed above is transmitted specifically to that user terminal on a dedicated control channel therefore, or on a broadcast channel with a user terminal address decodable thereby. Thus, only those terminals which are detected as being likely to interfere cease to be able to use the satellite system.

Alternatively, where the handsets are aware of their own positions (for example each is equipped with a GPS receiver), the control signal may specify the co-ordinates of the coverage area of the base station 119b and each user terminal maybe arranged to terminate uplink transmission only if it lies within that coverage area.

To deal with the second problem identified above, in an alternative embodiment, rather than making the satellite user terminals responsive to a control signal broadcast in the downlink from the satellite to cease satellite mode transmissions, the terrestrial base stations 119b which reuse the satellite uplink and downlink are equipped with a transmitter arranged to transmit the control signal.

The satellite codec within each satellite user terminal which can receive transmissions from the base station 119b (and hence might generate transmissions which would interfere with reception by that base station) is arranged, on detecting the control signal, to cease transmissions by the satellite system codec on the satellite uplink while the control signal is received.

The control signal might simply be a beacon, broadcast at a predetermined frequency. Alternatively, it might emulate one of the satellite broadcast control channels.

Thus, in this embodiment, with some small modification to the base stations 119b, only those user terminals which are actually within range of the base station are made unable to communicate with the satellite, and this is achieved regardless of whether the satellite downlink can be received by them or not. The terrestrial mobile codec in this embodiment (as in the last) does not require modification. This embodiment is effective not only with dual mode terminals sets but also with satellite user terminals which lack a terrestrial mobile codec, because the broadcast signal from the base station 119b is received and acted upon by the satellite system codec.

Finally, rather than modifying the base stations 119b, it is possible instead to modify the terrestrial mobile codecs of dual mode satellite user terminals, so that such terminals continuously monitor the downlink for signals from a terrestrial base station 119b. On detection of a CDMA downlink signal, the terrestrial codec sends a control signal to the satellite system codec to cease it's transmission on the satellite uplink. On loss of signal from the base station, after a predetermined time without signal from the base station, the terrestrial system codec issues a control signal to the satellite system codec permitting transmission once more on the satellite uplink when necessary.

This embodiment therefore has the advantage that minimal modifications to the terrestrial base stations 119 are required. However, it is only operable with dual mode satellite user terminals, since it is necessary to correctly detect signals from the terrestrial base stations 119b.

It will be seen that this embodiment, in which the satellite uplink spectrum is also available for terrestrial mobile uplink and the satellite downlink spectrum is also available for terrestrial mobile downlink, provides more bandwidth to the terrestrial network than the preceding embodiment, and enables common RF components to be used in the user terminal.

Unlike the preceding embodiment there is also the possibility of interference on the satellite uplink and the terrestrial uplink, but the former is mitigated by deploying the additional base stations 119b only in areas where the path of the satellite is attenuated by buildings, and the latter is mitigated by controlling the satellite user terminals to reduce their use of the satellite uplink. Since satellite uplink channels are on narrow frequency bands, the effect on the broadband terrestrial CDMA uplink channels of any residual satellite uplink transmissions is merely to increase slightly the noise floor experienced.

### THIRD EMBODIMENT

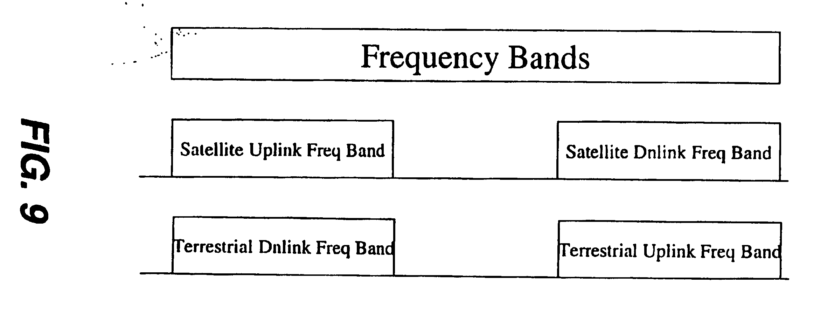

Referring to Figure 9, in this embodiment, the frequency reuse of the previous embodiment is reversed. That is to say, the satellite uplink is reused by the terrestrial downlink and vice versa. Thus, transmissions in the downlink from the satellite do not affect the terrestrial handsets, but could be received by the terrestrial base stations 119b. Each such base station can, however, be protected from transmission from above by an overlying metal plate. Although it would be possible for reflected satellite downlink transmissions to reach the base station, such reflections are at substantially lower power, due to interference with the direct downlink beam, and to attenuation at the reflection surface. Thus, such shielding, in addition to the shadowing and blockage caused by the deployment of the base stations 119b indoors and in urban areas substantially reduces the amplitude on the satellite downlink reaching the base stations 119b.

For similar reasons, and because the antennas of the base stations 119b are intended to broadcast predominantly in the azimuthal plane, the impact of the terrestrial downlink on the satellite uplink is minimal.

Although the signals transmitted on the terrestrial and satellite uplink by user terminals are of lower amplitude due to the lower power available in the user terminals, it is noted that the terrestrial uplink signals transmitted by terrestrial handsets could interfere with the satellite downlink signals received by satellite mode handsets, and vice versa, where active terrestrial and satellite mode handsets are close to each other.

Accordingly, in this embodiment, the techniques discussed in the above first and second embodiments in reducing satellite transmissions on the satellite downlink and handset transmissions on the satellite uplink are preferably employed.

Alternatively, rather than suppressing satellite user terminal uplink transmissions in response to the detection of a terrestrial base station 119b or in response to a command from the satellite, each dual mode handset of this embodiment may be arranged to detect CDMA transmission on the terrestrial uplink through the satellite uplink receiver, by coupling the CDMA codec in parallel to the satellite system codec to receive transmissions on the satellite system downlink frequency (i.e. the terrestrial uplink frequency used by other terrestrial handsets). On detection of transmissions from a terrestrial handset, the satellite system codec is instructed to cease to transmissions on the satellite uplink. Thus, where a dual mode terminal is close enough to a terrestrial mode terminal to detect transmission from it (and hence is likely to interfere with it) potentially interfering transmissions from the dual mode handset are terminated.

This embodiment has the advantage that the relatively powerful satellite and terrestrial downlink transmissions are received at the satellite and the base station, rather than at the user terminals, making interference at the user terminals less likely than interference at the satellite and base station. Since it is easier to provide sophisticated interference mitigation and cancellation techniques, of the type described in our earlier applications (WO 00/48333. WO 00/49735 or WO 00/35125) for example, at the network side rather than within the user terminal, the effects of any such interference can more easily be mitigated.

It will be clear that other possibilities for reuse by terrestrial networks of the satellite spectrum exist, making use of the above described observations and techniques. Further, the above described techniques may be combined.

As one example, it is possible for the first embodiment to be modified such that the terrestrial uplink and downlink occupy the satellite uplink. Further, it will be clear that each of the above described techniques for reducing the transmission from the satellite and/or the handset, or for detection techniques to do so, may be employed separately of the others, in other similar interference scenarios.

### OTHER EMBODIMENTS

It will be clear from the foregoing that the above described embodiment is merely one way of putting the invention into effect. Many other alternatives will be apparent to the skilled person and are within the scope of the present invention.

Whereas in the above described embodiments a dual mode user terminal comprises a common housing and user interface containing separate satellite system and terrestrial codecs, other constructions are possible; for example it could comprise separate single mode terminals interconnected by a wire or a wireless interface.

The CDMA can be third generation wide band CDMA (W-CDMA) or CDMA 2000.

The numbers of satellites and satellite orbits indicated are purely exemplary. Smaller numbers of geostationary satellites, or satellites in higher altitude orbits, could be used; or larger numbers of low earth orbit (LEO) satellites could be used. Equally, different numbers of satellites in intermediate orbits could be used.

It will be understood that components of embodiments of the invention may be located in different jurisdictions or in space. For the avoidance of doubt, the scope of the protection of the following claims extends to any part of a telecommunications apparatus or system or any method performed by such a part, which contributes to the performance of the inventive concept.

## Claims

1. A communications system comprising a satellite communications network which comprises a plurality of satellites (4) and a plurality of user terminals (2) communicating on satellite uplink and downlink bands using channels which are divided by frequency and time; and a terrestrial mobile communications network which comprises a plurality of base stations (119) and a plurality of user terminals (12) communicating on terrestrial uplink and downlink bands using channels which are divided by code;
**characterized in that**
at least one of the terrestrial bands at least partly reuses a frequency spectrum of at least one of the satellite bands for providing code-divided channels for the terrestrial mobile communications network.

2. A system according to claim 1, in which the terrestrial uplink and downlink bands at least partly reuse the satellite downlink band and do not reuse the satellite uplink band.

3. A system according to claim 1, in which the terrestrial uplink and downlink bands at least partly reuse the satellite uplink band and do not reuse the satellite downlink band.

4. A system according to claim 1, in which the terrestrial uplink band reuses the satellite uplink band, and the terrestrial downlink band reuses the satellite downlink band.

5. A system according to claim 1, in which the terrestrial downlink band reuses the satellite uplink band, and the terrestrial uplink band reuses the satellite downlink band.

6. A dual mode user terminal for use in a communications system comprising a satellite communications network and a terrestrial mobile communications network, wherein the satellite communications network comprises a plurality of satellites (4) and a plurality of user terminals (2) communicating on satellite uplink and downlink bands using channels which are divided by frequency and time, and wherein the terrestrial mobile communications network comprises a plurality of base stations (119) and a plurality of user terminals (12) communicating on terrestrial uplink and downlink bands using channels which are divided by code, wherein at least one of the terrestrial bands at least partly reuses a frequency spectrum of at least one of the satellite bands for providing code-divided channels for the terrestrial mobile communications network.

7. A dual mode user terminal according to claim 6, wherein the communications system is a system according to any of claims 1 to 5.

8. A satellite communications network comprising a plurality of satellites (4) and a plurality of user terminals (2) communicating on satellite uplink and downlink bands using channels which are divided by frequency and time, for use in a communications system which further comprises a terrestrial mobile communications network which comprises a plurality of base stations (119) and a plurality of user terminals (12) communicating on terrestrial uplink and downlink bands using channels which are divided by code, wherein at least one of the terrestrial bands at least partly reuses a frequency spectrum of at least one of the satellite bands for providing code-divided channels for the terrestrial mobile communications network.

9. A satellite communications network according to claim 8, wherein the communications system is a system according to any of claims 1 to 5.

10. A terrestrial communications network comprising a plurality of base stations (119) and a plurality of user terminals (12) communicating on terrestrial uplink and downlink bands using channels which are divided by code, for use in a communications system which further comprises a satellite communications network comprising a plurality of satellites (4) and a plurality of user terminals (2) communicating on satellite uplink and downlink bands using channels which are divided by frequency and time, wherein at least one of the terrestrial bands at least partly reuses a frequency spectrum of at least one of the satellite bands for providing code-divided channels for the terrestrial mobile communications network.

11. A terrestrial communications network according to claim 10, wherein the communications system is a system according to any of claims 1 to 5.

12. A method for operating a communications system comprising a satellite mobile communications network which comprises a plurality of satellites (4) and a plurality of user terminals (2) communicating on satellite uplink and downlink bands using channels which are divided by frequency and time; and a terrestrial mobile communications network which comprises a plurality of base stations (119) and a plurality of user terminals (12) communicating on terrestrial uplink and downlink bands using channels which are divided by code;
**characterized in that**
the method comprises at least partially reusing a frequency spectrum of at least one of the satellite bands by at least one of the terrestrial bands for providing code-divided channels for the terrestrial mobile communications network.

## Patentansprüche

1. Kommunikationssystem, umfassend ein Satelliten-Mobilkommunikationsnetz, das eine Vielzahl von Satelliten (4) und eine Vielzahl von Benutzerendgeräten (2) umfasst, die auf Satelliten-Uplink- und Downlink-Bändern unter Verwendung von Kanälen kommunizieren, die frequenz- und zeitgetrennt sind; und ein terrestrisches Mobilkommunikationsnetz, das eine Vielzahl von Basisstationen (119) und eine Vielzahl von Benutzerendgeräten (112) umfässt, die auf terrestrischen Uplink- und Downlink-Bändern unter Verwendung von Kanälen kommunizieren, die codegetrennt sind;
**dadurch gekennzeichnet, dass**
wenigstens eines der terrestrischen Bänder wenigstens teilweise ein Frequenzspektrum von wenigstens einem der Satellitenbänder wiederverwendet, um codegetrennte Kanäle für das terrestrische Mobilkommunikationsnetz bereitzustellen.

2. System nach Anspruch 1, in dem die terrestrischen Uplink- und Downlink-Bänder wenigstens teilweise das Satelliten-Downlink-Band wiederverwenden.

3. System nach Anspruch 1, in dem die terrestrischen Uplink- und Downlink-Bänder wenigstens teilweise das Satelliten-Uplink-Band wiederverwenden und das Satelliten-Downlink-Band nicht wiederverwenden.

4. System nach Anspruch 1, in dem das terrestrische Uplink-Band das Satelliten-Uplink-Band wiederverwendet und das terrestrische Downlink-Band das Satelliten-Downlink-Band wiederverwendet.

5. System nach Anspruch 1, in dem das terrestrische Downlink-Band das Satelliten-Uplink-Band wiederverwendet und das terrestrische Uplink-Band das Satelliten-Downlink-Band wiederverwendet.

6. Dualmodus-Benutzerendgerät für den Einsatz in einem Kommunikationssystem, das ein Satelliten-Mobilkommunikationsnetz und ein terrestrischen Mobilkommunikationsnetz umfasst, wobei das Satelliten-Mobilkommunikationsnetz eine Vielzahl von Satelliten (4) und eine Vielzahl von Benutzerendgeräten (2) umfasst, die auf Satelliten-Uplink- und Downlink-Bändern unter Verwendung von Kanälen kommunizieren, die frequenz- und zeitgetrennt sind, und wobei das terrestrische Mobilkommunikationsnetz eine Vielzahl von Basisstationen (119) und eine Vielzahl von Benutzerendgeräten (112) umfasst, die auf terrestrischen Uplink- und Downlink-Bändern unter Verwendung von Kanälen kommunizieren, die codegetrennt sind, wobei wenigstens eines der terrestrischen Bänder wenigstens teilweise ein Frequenzspektrum von wenigstens einem der Satellitenbänder wiederverwendet, um codegetrennte Kanäle für das terrestrische Mobilkommunikationsnetz bereitzustellen.

7. Dualmodus-Benutzerendgerät nach Anspruch 6, wobei das Kommunikationssystem ein System gemäß irgendeinem der Ansprüche 1 bis 5 ist.

8. Satellitenkommunikationsnetz, das eine Vielzahl von Satelliten (4) und eine Vielzahl von Benutzerendgeräten (2) umfasst, die auf Satelliten-Uplink- und Downlink-Bändern unter Verwendung von Kanälen kommunizieren, die frequenz- und zeitgetrennt sind, zum Einsatz in einem Kommunikationssystem, das des Weiteren ein terrestrisches Mobilkommunikationsnetz umfasst, das eine Vielzahl von Basisstationen (119) und eine Vielzahl von Benutzerendgeräten (112) umfasst, die auf terrestrischen Uplink- und Downlink-Bändern unter Verwendung von Kanälen kommunizieren, die codegetrennt sind, wobei wenigstens eines der terrestrischen Bänder wenigstens teilweise ein Frequenzspektrum von wenigstens einem der Satellitenbänder wiederverwendet, um codegetrennte Kanäle für das terrestrische Mobilkommunikationsnetz bereitzustellen.

9. Satellitenkommunikationsnetz nach Anspruch 8, wobei das Kommunikationssystem ein System gemäß irgendeinem der Ansprüche 1 bis 5 ist.

10. Terrestrisches Kommunikationsnetz, das eine Vielzahl von Basisstationen (119) und eine Vielzahl von Benutzerendgeräten (112) umfasst, die auf terrestrischen Uplink-und Downlink-Bändern unter Verwendung von Kanälen kommunizieren, die codegetrennt sind, für den Einsatz in einem Kommunikationssystem, das des Weiteren ein Satellitenkommunikationsnetz umfasst, das eine Vielzahl von Satelliten (4) und eine Vielzahl von Benutzerendgeräten (2) umfasst, die auf Satelliten-Uplink- und Downlink-Bändern unter Verwendung von Kanälen kommunizieren, die frequenz- und zeitgetrennt sind, wobei wenigstens eines der terrestrischen Bänder wenigstens teilweise ein Frequenzspektrum von wenigstens einem der Satellitenbänder wiederverwendet, um codegetrennte Kanäle für das terrestrische Mobilkommunikationsnetz bereitzustellen.

11. Terrestrisches Kommunikationsnetz nach Anspruch 10, wobei das Kommunikationssystem ein System gemäß irgendeinem der Ansprüche 1 bis 5 ist.

12. Kommunikationsverfahren zum Betreiben eines Kommunikationssystems, das ein Satelliten-Mobilkommunikationsnetz umfasst, das eine Vielzahl von Satelliten (4) und eine Vielzahl von Benutzerendgeräten (2) umfasst, die auf Satelliten-Uplink- und Downlink-Bändern unter Verwendung von Kanälen kommunizieren, die frequenz-und zeitgetrennt sind; und ein terrestrisches Mobilkommunikationsnetz, das eine Vielzahl von Basisstationen (119) und eine Vielzahl von Benutzerendgeräten (112) umfasst, die auf terrestrischen Uplink- und Downlink-Bändern unter Verwendung von Kanälen kommunizieren, die codegetrennt sind;
**dadurch gekennzeichnet, dass**
das Verfahren die wenigstens teilweise Wiederverwendung eines Frequenzspektrums von wenigstens einem der Satellitengänder durch wenigstens eines der terrestrischen Bänder umfasst, um codegetrennte Kanäle für das terrestrische Mobilkommunikationsnetz bereitzustellen.

## Revendications

1. Système de communications comprenant un réseau de communications satellitaire qui comprend une pluralité de satellites (4) et une pluralité de terminaux d'utilisateur (2) communiquant sur des bandes de liaison montante satellitaires et de liaison descendante satellitaires utilisant des canaux qui sont répartis par fréquence et temps ; et un réseau de communications mobiles terrestre qui comprend une pluralité de stations de base (119) et une pluralité de terminaux d'utilisateur (12) communiquant sur des bandes de liaison montante terrestres et de liaison descendante terrestres utilisant des canaux qui sont répartis par code ;
**caractérisé en ce que**
au moins une des bandes terrestres réutilise au moins partiellement un spectre de fréquences d'au moins une des bandes satellitaires pour fournir des canaux répartis par code au réseau de communications mobiles terrestre.

2. Système selon la revendication 1, dans lequel lesdites bandes de liaison montante terrestres et de liaison descendante terrestres réutilisent au moins partiellement la bande de liaison descendante satellitaire et ne réutilisent pas la bande de liaison montante satellitaire.

3. Système selon la revendication 1, dans lequel les bandes de liaison montante terrestres et de liaison descendante terrestres réutilisent au moins partiellement la bande de liaison montante satellitaire et ne réutilisent pas la bande de liaison descendante satellitaire.

4. Système selon la revendication 1, dans lequel la bande de liaison montante terrestre réutilise la bande de liaison montante satellitaire, et la bande de liaison descendante terrestre réutilise la bande de liaison descendante satellitaire.

5. Système selon la revendication 1, dans lequel la bande de liaison descendante terrestre réutilise la bande de liaison montante satellitaire, et la bande de liaison montante terrestre réutilise la bande de liaison descendante satellitaire.

6. Terminal d'utilisateur bimode pour une utilisation dans un système de communications comprenant un réseau de communications satellitaire et un réseau de communications mobiles terrestre, dans lequel le réseau de communications satellitaire comprend une pluralité de satellites (4) et une pluralité de terminaux d'utilisateur (2) communiquant sur des bandes de liaison montante et de liaison descendante satellitaires utilisant des canaux qui sont répartis par fréquence et temps ; et dans lequel le réseau de communications mobiles terrestre comprend une pluralité de stations de base (119) et une pluralité de terminaux d'utilisateur (12) communiquant sur des bandes de liaison montante et de liaison descendante terrestres utilisant des canaux qui sont répartis par code, dans lequel au moins une des bandes terrestres réutilise au moins partiellement un spectre de fréquences d'au moins une des bandes satellitaires pour fournir des canaux répartis par code au réseau de communications mobiles terrestre.

7. Terminal d'utilisateur bimode selon la revendication 6, dans lequel le système de communications est un système selon l'une quelconque des revendications 1 à 5.

8. Réseau de communications satellitaire comprenant une pluralité de satellites (4) et une pluralité de terminaux d'utilisateur (2) communiquant sur des bandes de liaison montante et de liaison descendante satellitaires utilisant des canaux qui sont répartis par fréquence et temps, pour une utilisation dans un système de communications qui comprend en outre un réseau de communications mobiles terrestre qui comprend une pluralité de stations de base (119) et une pluralité de terminaux d'utilisateur (12) communiquant sur des bandes de liaison montante et de liaison descendante terrestres utilisant des canaux qui sont répartis par code, dans lequel au moins une des bandes terrestres réutilise au moins partiellement un spectre de fréquences d'au moins une des bandes satellitaires pour fournir des canaux répartis par code au réseau de communications mobiles terrestre.

9. Réseau de communications satellitaire selon la revendication 8, dans lequel le système de communications est un système selon l'une quelconque des revendications 1 à 5.

10. Réseau de communications terrestre comprenant une pluralité de stations de base (119) et une pluralité de terminaux d'utilisateur (12) communiquant sur des bandes de liaison montante et de liaison descendante terrestres utilisant des canaux qui sont répartis par code, pour une utilisation dans un système de communications qui comprend en outre un réseau de communications satellitaire comprenant une pluralité de satellites (4) et une pluralité de terminaux d'utilisateur (2) communiquant sur des bandes de liaison montante et de liaison descendante satellitaires utilisant des canaux qui sont répartis par fréquence et temps, dans lequel au moins une des bandes terrestres réutilise au moins partiellement un spectre de fréquences d'au moins une des bandes satellitaires pour fournir des canaux répartis par code au réseau de communications mobiles terrestre.

11. Réseau de communications terrestre selon la revendication 10, dans lequel le système de communications est un système selon l'une quelconque des revendications 1 à 5.

12. Procédé permettant d'exploiter un système de communications comprenant un réseau de communications mobiles satellitaire qui comprend une pluralité de satellites (4) et une pluralité de terminaux d'utilisateur (2) communiquant sur des bandes de liaison montante et de liaison descendante satellitaires utilisant des canaux qui sont répartis par fréquence et temps ; et un réseau de communications mobiles terrestre qui comprend une pluralité de stations de base (119) et une pluralité de terminaux d'utilisateur (12) communiquant sur des bandes de liaison montante et de liaison descendante terrestres utilisant des canaux qui sont répartis par code ;
**caractérisé en ce que**
le procédé comprend au moins la réutilisation partielle d'un spectre de fréquences d'au moins une des bandes satellitaires par au moins une des bandes terrestres pour fournir des canaux répartis par code au réseau de communications mobiles terrestre.
